(19) Europäisches Patentamt
European Patent Office
Office européen des brevets

(11) Publication number: **0 121 883**
**A1**

(12) # EUROPEAN PATENT APPLICATION

(21) Application number: **84103604.9**

(22) Date of filing: **31.03.84**

(51) Int. Cl.³: **C 08 L 67/02**
//
B32B27/36 ,(C08L67/02, 67/02)

(30) Priority: **11.04.83 US 483450**

(43) Date of publication of application: **17.10.84**
**Bulletin 84/42**

(84) Designated Contracting States: **DE FR GB IT NL**

(71) Applicant: **GENERAL ELECTRIC COMPANY, 1 River Road, Schenectady New York 12305 (US)**

(72) Inventor: **Campbell, Richard William, 213 Bayer Drive, Evansville Indiana 47712 (US)**

(74) Representative: **Catherine, Alain et al, GETSCO 42, avenue Montaigne, F-75008 Paris (FR)**

(54) **Low gas permeable polyester compositions and articles formed therefrom.**

(57) New and improved thermoplastic barrier compositions exhibiting low permeability to carbon dioxide and water vapor are disclosed comprising an ultrahigh molecular weight poly(1,4-butylene terephthalate) resin having an intrinsic viscosity of above about 1.5 dl/g as measured in a $^{60}/_{40}$ mixture of a phenol/tetrachlorethane at 30°C and a modifier therefor comprising an amorphous copolyester copolymer derived from a glycol portion comprising 1,4-cyclohexanedimethanol or a mixture of 1,4-cyclohexanedimethanol and ethylene glycol in molar ratios of about 1:4 to 4:1, respectively, and an acid portion comprising terephthalic acid, isophthalic acid, a mixture of the two acids, provided that when the glycol portion comprises 1,4-cyclohexanedimethanol alone, the acid portion comprises a mixture of terephthalic and isophthalic acids. The compositions are readily thermoformable, even by blow molding techniques and have high melt strength in molten form. They have excellent resistance to permeation by water vapor and carbon dioxide. New and improved single and multiwall barrier containers formed from the compositions are also disclosed.

EP 0 121 883 A1

0121883

UNITED STATES PATENT APPLICATION

OF: Ping Yuan Liu and
Richard William Campbell

FOR: LOW GAS PERMEABLE POLYESTER COMPOSITIONS AND ARTICLES FORMED THEREFROM

## BACKGROUND OF THE INVENTION

The present invention relates to thermoplastic polyester compositions exhibiting good processability which are characterized by low permeability to water and carbon dioxide. More particularly, the invention relates to thermoplastic compositions comprising an ultrahigh molecular weight poly(1,4-butylene terephthalate) and a modifier therefor comprising an amorphous copolyester copolymer derived from a glycol portion comprising 1,4-cyclohexanedimethanol and ethylene glycol in molar ratios of 1:4 to 4:1 respectively, and an acid portion comprising at least one aromatic dicarboxylic acid selected from terephthalic acid, isophthalic acid and mixtures of the two acids. The present invention also relates to thermoformed

barrier films, barrier laminates and barrier containers comprised of or incorporating these compositions.

Presently, it is known to use certain high molecular weight thermoplastic polyesters, particularly poly(ethylene terephthalate), in providing thermoformed barrier containers, such as carbonated soft drink bottles. Typically, these barrier containers are made from so-called "bottle grade" poly(ethylene terephthalate) which generally has an intrinsic viscosity of 0.72 to 0.74 dl/g as measured in a 60/40 mixture of phenol/ tetrachloroethane at 30°C. The barrier containers made from "bottle grade" poly(ethylene terephthalate) weigh only one-tenth as much as glass, can withstand internal pressures of 100 pounds per square inch and are rather impermeable to carbon dioxide gas. These bottles are made in multimillion quantities by thermoforming techniques, such as blow molding, co-extrusion blow molding, co-extrusion followed by thermoforming, co-injection blow molding and the like.

More particularly, in U.S. 3,745,150, amorphous, transparent and glossy hollow containers in the shape of bottles are described which are blow molded from compositions comprising polyethylene terephthalate. The polyethylene terephthalate compositions employed therein have an inherent viscosity of 0.80 - 1.30 as measured in a 75/25 mixture of trifluoroacetic acid/methylene chloride at 30°C and may comprise either (a) commerical grade polyethylene terephthalate, wherein at least about 97% of the polymer contains repeating ethylene terephthalate units of the formula:

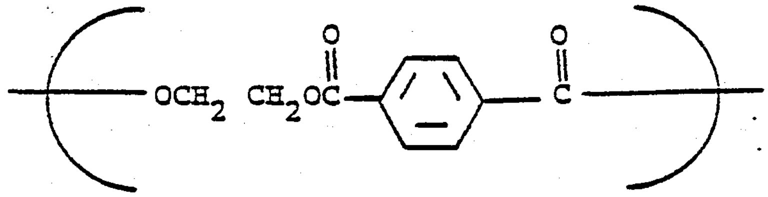

with the remainder being minor amounts of oligomers, diethylene glycol and other ester-forming components formed in the manufacturing process; or (b) copolymers of ethylene terephthalate containing up to about 10 mole percent of other dissimilar glycol, and/or carboxylic ester-forming reactants.

In U.S. 3,822,332 it is disclosed that certain polyethylene terephthalates wherein the acid component consists of at least 80 mol percent of terephthalic acid radicals and the diol component consists of at least 80 mol percent of ethylene glycol radicals having an intrinsic viscosity of at least 0.70 dl/g as measured in a 50/50 mixture of phenol/tetrachloroethane at 30°C and a crystallization temperature of at least 150°C may be shaped into containers such as bottles by injection-blow molding techniques.

A somewhat chemically related family of polyester resins comprise amorphous copolyester copolymer resins which are generally copolyesters of ethylene glycol and 1,4-cyclohexanedimethanol with terephthalic and isophthalic acids. These resins are known to be blow-moldable, but for one reason or another, they have not become commercially important in the manufacture of barrier containers, such as bottles.

Still other related thermoplastic polyesters are the poly(1,4-butylene terephthalate) resins.

These resins are known to have a desirable low tendency to permit water vapor to pass through walls of vessels made therefrom, and at higher melt viscosities, they have been found to be excellent in their resistance to carbon dioxide permeation. In the past, poly(1,4-butylene terephthalate) generally has not been widely used in blow molding applications because of its known tendency to drool when extruded. More particularly, when this resin is extruded, the melt viscosity is generally so low that it is difficult to form an inflatable bulb of molten resin, or parison, which can be inflated with a gas and expanded to take on the shape of a mold.

However, it has been disclosed in U.S. 3,814,786 that a polybutylene terephthalate resin can be blow molded into shaped containers, such as bottles, provided the polybutylene terephthalate resin has an intrinsic viscosity of at least 1.05 dl/g and preferably 1.1 to 1.4 dl/gm as measured in orthochlorophenol at 25°C and the molten resin is processed at a temperature between its melt temperature and 257°C.

In general, these and other efforts to regulate the melt viscosity of a poly(1,4-butylene terephthalate) resin to render it suitable for use in blow molding have met with limited success because in order to provide a resin which does not tend to drool when extruded to form a blow moldable parison, the melt viscosity of the resin needs to be so high that processing difficulties become a significant problem. For example, generally high extrusion temperatures must be utilized to provide the melt-viscosity controlled resin with sufficient flow to form a parison and often the resin burns or degrades during extrusion

and injection prior to blow-molding. This generally renders even the melt-visocity controlled poly(1,4-butylene terephthalate) resins unsuitable for large scale blow molding applications.

At present, the need still exists for thermoplastic compositions which exhibit the excellent barrier properties of a high molecular weight poly(1,4-butylene terephthalate) resin and which simultaneously possess processing characteristics suitable for use in high speed manufacture of blow molded barrier containers, as well as, the manufacture of other articles by different thermoforming techniques.

## SUMMARY OF THE INVENTION

Unexpectedly, in view of the foregoing, it has now been discovered that a blow moldable thermoplastic composition exhibiting improved processability and excellent barrier properties in the form of low permeability to carbon dioxide and water vapor is provided by a thermoplastic composition comprising an ultrahigh molecular weight poly(1,4-butylene terephthalate) resin and a modifier therefor selected from a certain group of amorphous copolyester copolymer resins.

It has now been found that when the above-mentioned modifiers are added to an ultrahigh molecular weight poly(1,4-butylene terephthalate) resin, a thermoplastic composition possessing superior barrier properties is provided which may be thermoformed into useful articles, even by high speed blow molding techniques.

The compositions of the subject invention are useful by themselves for forming barrier films and barrier containers which exhibit an improved resistance to the transmission of carbon dioxide as compared with "bottle grade" poly(ethylene terephthalate) resins and, in addition, exhibit other advantageous physical properties.

Moreover, it has unexpectedly been discovered that the compositions of the subject invention are uniquely suited for incorporation in multilayered barrier laminates and multiwalled barrier containers which comprise at least one layer of the barrier compositions of the subject invention together with at least one layer of another thermoplastic resin or

resin composition. More particularly, a preferred multilayered barrier laminate and multiwalled barrier container within the scope of the subject invention comprises a layer of the barrier composition of the invention disposed adjacent the major face of at least one layer of an aromatic polycarbonate resin, and especially preferably,disposed intermediate and adjacent to the major faces of two layers of aromatic polycarbonate material to form a sandwich structure laminate. These laminates and multiwalled barrier containers having the above-described polycarbonate - barrier layer - polycarbonate laminar construction possess several distinct advantages, in that articles and containers made from these laminates are physiologically harmless, they exhibit superior resistance to washing media and are recyclable.

Unexpectedly, these laminate materials incorporating the barrier compositions of the subject invention may be thermoformed into strongly adhered laminates without the need for additional adhesive compositions previously required to firmly adhere incompatible thermoplastic resin layers into strongly laminated materials. Furthermore, the compositions of the subject invention may be employed to make barrier containers, such as bottles having the desirable polycarbonate - barrier compostion - polycarbonate sidewall construction by high speed co-extrusion blow molding techniques.

Other objects and advantages of the subject invention will become apparent from the following detailed description of the invention, taken in conjunction with the drawings in which:

## BRIEF DESCRIPTION OF THE DRAWINGS

Figure 1 is a schematic diagram depicting the major steps in forming the new and improved blow molded, single walled barrier container of the subject invention.

Figure 2 is a schematic diagram depicting the major steps in forming the new and improved co-extrusion blow molded multiwalled barrier container of the subject invention.

## DETAILED DESCRIPTION OF THE INVENTION

In its broadest aspects, the subject invention provides new and improved thermoplastic compositions comprising:

(a) an ultrahighly polymeric poly(1,4-butylene terephthalate) resin having an intrinsic viscosity of above about 1.5 dl/g as measured in a 60/40 mixture of phenol/tetrachloroethane at 30°C; and

(b) a modifier therefor comprising an amorphous copolyester copolymer derived from

(i) a glycol portion comprising a glycol selected from the group consisting of 1,4-cyclohexanedimethanol and a mixture of 1,4-cyclohexanedimethanol and ethylene glycol wherein the molar ratio of 1,4-cyclohexanedimethanol to ethylene glycol is from about 1:4 to 4:1, respectively; and

(ii) an acid portion comprising an aromatic dicarboxylic acid selected from the group consisting of terephthalic acid, isophthalic acid and a mixture of the two acids, provided that when the glycol portion comprises 1,4-cyclohexanedimethanol alone, the acid portion comprises a mixture of terephthalic acid and isophthalic acids.

It is already known, e.g. from Fox and Wambach, U.S. 3,953,394, that poly(ethylene terephthalate) resins, which can also contain units derived from cyclohexanedimethanol, are compatible in all proportions with poly(1,4-butylene terephthalate) and that the latter can cover wide molecular weight ranges, the upper limit of intrinsic viscosity being not critical, but specifically mentioned is about 2.5 dl/g as measured in a 60/40 phenol/tetrachloroethane mixture. However, an express preference is stated for intrinsic viscosities in the moderate molecular weight range, 0.5 to 1.3 dl/g., and not in the ultrahigh range, e.g., above 1.5 dl/g. used herein. Moreover, with respect to the poly(ethylene

terephthalate) component in the said Fox and Wambach patent, even though it can contain units derived from cyclohexanedimethanol, the amounts of the latter are said to be "small". Such a material should not reasonably be construed to be in the molar range of 1:4 to 4:1 ethylene glycol to cyclohexanedimethanol used in the special family of amorphous copolyester modifiers herein. In any event, the disclosure in the Fox and Wambach patent does not deal in any way with the melt viscosity problems and the vapor permeability problems so advantageously solved by thermoforming the instant compositions into barrier containers.

These compositions exhibit good processability and may be utilized to form articles by methods conventionally used for shaping thermoplastic compositions including, but not limited to, extrusion, co-extrusion, film extrusion, profile extrusion, pipe extrusion, injection molding, injection blow molding, extrusion blow molding, extrusion coating, foam molding, foam extrusion, thermoforming, and the like, as well as multiprocessing methods, such as film co-extrusion followed by thermoforming, and extrusion - co-injection blow molding, more particularly described hereinafter, to name but a few. The compositions may be conventionally processed without the difficulties encountered in the past when trying to process high molecular weight poly(1,4-butylene terephthalate) resins.

The compositions of the subject invention exhibit good processability, good physical properties and excellent barrier properties as evidenced by low permeability to carbon dioxide and water vapor, over a wide composition range.

Generally, and without limitation, useful compositions possessing the above-described properties are obtained with compositions comprising from about 98 to 2 parts by weight of ultrahigh molecular weight poly(1,4-butylene terephthalate) resin, component (a), and from about 2 to 98 parts by weight of amorphous copolyester copolymer modifier, component (b), per 100 parts by weight of (a) and (b) combined. In preferred embodiments however, the subject compositions will comprise from about 20 to 80 parts by weight of component (b) per 100 parts by weight of (a) and (b) combined. The subject compositions may also include impact modifiers, flame retardants, reinforcing agents, fillers and pigments or the like, if desired.

The ultrahighly polymeric or ultrahigh molecular weight poly(1,4-butylene terephthalate) resins for use herein as component (a) generally comprise saturated condensation products of 1,4-butanediol and aromatic dicarboxylic acids, predominantly terephthalic acid, or derivatives thereof. The resin may be branched, for example, either by crosslinking through chemical linkages or in other known manners, but this is not preferred because when the branched resin is subjected to a process for forming the ultrahigh molecular weight resins for use herein, often a very viscous polymerization mixture has to be contended with. It is to be understood that the poly(1,4-butylene terephthalate) resins may also include small amounts of cycloaliphatic linkages, such as those derived from 1,4-cyclohexanedimethanol. In addition to terephthalic acid units, other dicarboxylic acids, such as adipic acid, naphthalene dicarboxylic acid, isophthalic acid and ortho-phthalic acid can be used, e.g., from about 0.5 to about 15 mole % of the total acid units. The alkylene constituent can likewise be varied and

may comprise units derived form ethylene glycol, propylene glycol, 1,5-pentanediol, 1,6-hexanediol, 1,10-decanediol, the cycloaliphatic diols,mixtures thereof and the like. Preferably, the alkylene units will contain from 2 to 6 carbon atoms, and especially preferably, the alkylene units will be 1,4-butylene units, because these provide polyesters which crystallize very rapidly from the melt.

Processes for preparing such polyesters are well known to those skilled in this art. In general, the terephthalic acid or ester and an excess of the alkylene glycol are mixed in the presence of a conventional polyester catalyst. Thereafter the mixture is heated to form a prepolymer which is then heated under a high vacuum until the usual high, but not ultra-high, degree of polymerization is reached. These processes are ably described in U.S. 2,465,319; U.S. 3,047,539; and U.S. 3,692,744, all of which are incorporated herein by reference.

Whether branched or unbranched, it is essential to produce component (a) in a higher than conventional molecular weight range. Generally, the ultrahigh molecular weight poly(1,4-butylene terephthalate) resins for use herein will have an intrinsic viscosity of greater than about 1.5 dl/g as measured in a 60/40 mixture of phenol/tetrachloroethane at 30°C. Especially excellent results can be achieved with a poly(1,4-butylene terephthalate) having an intrinsic viscosity of 1.74 dl/g, which corresponds, approximately, to a molecular weight of about 55,000. This ultrahigh range of polymerization is not easily achieved by conventional procedures, but means are known, such as solid state polymerization techniques, to obtain it.

An especially preferred and convenient method of forming ultrahigh molecular weight poly(1,4-butylene terephthalates) for use herein is by re-extruding a conventional molecular weight poly(1,4-butylene terephthalate) resin, for example, one having an intrinsic viscosity of about 1.1 dl/g. together with a small amount of about 1 percent by weight of a sodium carbonate catalyst at about 248°- 270°C. This procedure results in an increase in melt viscosity and intrinsic viscosity to the ultrahigh ranges for use herein. Further information on similar methods and suitable catalysts for forming ultrahigh molecular weight polyesters may be found in U.S. 4,351,758 to Lu et al and Japanese Patent No. 46,646 (1973) as abstracted in Chem. Abstracts 81:4492,entry 4485g (1974), both of which are incorporated herein by reference. This procedure will be more particularly illustrated in the ensuing examples.

The amorphous copolyester copolymers for use as modifier component (b) herein, generally comprise, without limitation, copolyesters derived from a glycol portion comprising either 1,4-cyclohexanedimethanol alone or a mixture of 1,4-cyclohexanedimethanol and ethylene glycol wherein the molar ratio of 1,4-cyclohexanedimethanol to ethylene glycol is from about 1:4 to 4:1 respectively, and an acid portion comprising terephthalic acid, isophthalic acid, or a mixture of both acids. Where the glycol portion comprises only 1,4-cyclohexanedimethanol a mixture of terephthalic and isophthalic acids are used in the acid portion of the copolyester.

The polyester copolymer component (b) may be prepared by procedures well known to those skilled in this art, such as by condensation reactions substantially as shown and described in U.S. 2,901,466. More particularly, the acid or mixture of acids or alkyl esters of the aromatic dicarboxylic acid or acids, for example dimethylterephthalate, together with the dihydric alcohols are charged to a flask and heated to temperatures sufficient to cause condensation of the copolymer to begin, for example to 150°-225°C. Thereafter, the temperature is raised to about 250° to 300°C., a vacuum is applied, and the condensation reaction is allowed to proceed until substantially complete.

The copolyesters for use as component (b) in this invention generally will have an intrinsic viscosity of at least about 0.4 dl./gm as measured in 60/40 phenol/tetrachloroethane or other similar solvent at about 30°C. The relative amounts of the 1,4-cyclohexanedimethanol to ethylene glycol in the glycol portion may vary so long as the molar ratio of 1,4-cyclohexanedimethanol to ethylene glycol is from 1:4 to 4:1, in order to provide a polyester copolymer having suitable properties. This will enable less destructive processing and molding temperatures to be employed when forming shaped articles from the compositions of this invention. Copolymers having compositions within this range are useful if depression of the heat distortion tmperature of the ultrahigh polymer component (a) is desired, because the addition of small amounts of these copolymers yield large depressions in processing temperatures for the compositions as a whole, without adversely affecting other desired physical properties, especially the permeability properties.

A preferred copolymer for use as component (b) in the subject invention is a copolymer as described above wherein the glycol portion has a predominance of 1,4-cyclohexanedimethanol over ethylene glycol, e.g.,

greater than 50/50 mixture, and especially preferably is about 65 molar 1,4-cyclohexanedimethanol to 35 molar ethylene glycol and the acid portion is terephthalic acid. When this preferred copolyester is blended with ultrahigh molecular weight poly(1,4-butylene terephthalate), the resultant blends are generally compatible over a broad range of the components, exhibit a single glass transition temperature indicating the formation of a single phase blend, and exhibit excellent transparencies. A commercially available copolyester of this preferred type was EKTAR PCTG sold by the Eastman Chemical Company.

Another preferred copolyester for use as component (b) in this invention is a copolyester as described above wherein the glycol portion has a predominance of ethylene glycol over 1,4-cyclohexanedimethanol, for example greater than 50/50 and especially preferably is about 70 molar ethylene glycol to 30 molar 1,4-cyclohexanedimethanol and the acid portion is terephthalic acid. When this preferred copolyester is blended with the ultrahigh molecular weight polyester over broad ranges of the components, the compositions likewise display excellent strength and resistance to permeation by water or carbon dioxide. A preferred copolyester of this type is also commercially available under the tradename KODAR PETG 6763 from Eastman Chemical Company.

Still another preferred amorphous copolyester copolymer is the reaction product formed by condensing 1,4-cyclohexanedimethanol and a mixture of isophthalic and terephthalic acids. This amorphous copolymer may be prepared as described above or as described in U.S. 4,188,134 incorporated herein by reference. Generally this

preferred copolymer is formed by condensing 1,4-cyclohexanedimethanol with a mixture of from 10% to 25% by weight isophthalic acid and from 90% to 75% by weight terephthalic acid. A commercially available copolymer of this type for use herein is sold under the tradename KODAR A150 from the Eastman Chemicals Company.

The compositions of this invention are prepared by methods well known in this art. In general, the ultrahigh molecular weight poly(1,4-butylene terephthalate) and the copolyester copolymer together with impact modifiers, flame retardant agents, foaming agents, reinforcing agents, pigments, and/or stabilizers, (if used) are blended in an extruder and are then extruded to form pellets. Thereafter they may be processed and thermoformed by the conventional methods referred to above to form useful shaped articles.

These compositions are particularly useful for forming articles wherein the combination of good physical properties and low gas permeability are desired, for example, such articles as barrier films, barrier laminates and barrier containers. More importantly, the compositions of the subject invention may be formed into barrier films and barrier containers by high speed blow molding techniques. In this connection, it has also been discovered, as was completely unappreciated in the Fox and Wambach patent, U.S. 3,953,394 referred to above, that a barrier film and a barrier container exhibiting low gas permeability to carbon dioxide and water vapor may be prepared from blow moldable composition comprising an ultrahigh molecular weight poly(1,4-butylene terephthalate) and a polyester derived from ethylene glycol and terephthalic acid.

In accordance with this aspect, the subject invention relates to new and improved barrier films and barrier containers, such as carbonated soda bottles, exhibiting improved barrier resistance to the permeation of water vapor and carbon dioxide, thermoformed from a thermoplastic composition which comprises:

(a) an ultrahighly polymeric poly(1,4-butylene terephthalate) resin having an intrinsic viscosity of above about 1.5 dl/g as measured in a 60/40 mixture of phenol/tetrachloroethane at 30°C; and

(b) a modifier therefor comprising a polyester derived from

(i) a glycol portion comprising a glycol selected from the group consisting of ethylene glycol, 1,4-cyclohexanedimethanol, and a mixture of 1,4-cyclohexanedimethanol and ethylene glycol wherein the molar ratio of 1,4-cyclohexanedimethanol to ethylene glycol is from about 1:4 to 4:1; respectively; and

(ii) an acid portion comprising an aromatic dicarboxylic acid selected from the group consisting of terephthalic acid, isophthalic acid and a mixture of both acids, provided that when the glycol portion comprises 1,4-cyclohexanedimethanol alone, the acid portion comprises a mixture of terephthalic and isophthalic acids.

These new and improved barrier films and barrier containers are advantageously prepared in accordance with high speed blow molding techniques, although other thermoforming techniques such as injection molding, could be employed.

Referring now to Figure 1, the major steps in blow molding the new and improved barrier containers of the subject invention are schematically shown. In general, the process may be described in three major steps A, B and C wherein in Step A the new and improved thermoplastic barrier composition of the subject invention is injected into a preforming mold to form a parison; in Step B the parison is then transferred to a pre-heated blow mold wherein an inflating gas is introduced into the interior of the parison to expand the parison to contact the interior walls of the blow mold. This imparts the bottle configuration to the parison. Thereafter, in step C the formed parison is cooled to produce the new and improved barrier container of the subject invention which is then ejected from the machine and stored for future use.

More particularly, and as illustrated in Figure 1, Step A, the new and improved barrier containers of the subject invention are formed by injecting the molten blow moldable thermoplastic barrier composition 10 from the die 12 of an extruder nozzle 14 into preforming mold 16. Preforming mold 16 is generally a split mold which has been closed about a cylindrical mandrel 18. As composition 10 is extruded or injected into heated preforming mold 16, the thermoplastic composition 10 fills the space provided between mandrel 18 and the inner walls of preforming mold 16 to take on a hollow cylindrical shape called a parison 20. In preforming mold 16, a neck configuration may be imparted to the parison 20 such as for example, threads 22 as shown, and the bottom of the parison 20 is usually closed and sealed, not shown.

Thereafter split mold 16 is separated, usually by hydraulic or pneumatic means, and the preformed and still molten parison 20' is transferred by mandrel 18 to Step B where a split blow mold 26 is closed about preformed parison 20'. Blow mold 26 is provided with an interior surface designed to impart the final configuration to the barrier container being formed, in this case a bottle. With the molten preshaped parison 20' in position within blow mold 26, the blowing of the parison into a bottle shape is accomplished by injecting an inert gas, such as nitrogen, into the interior of the parison 20' to inflate and expand the molten parison. This is usually accomplished by means of tiny gas jets strategically located within the blow mold 26, however in the apparatus depicted in Step B, the gas jets are radially disposed along the periphery of mandrel 18 and adjacent the neck portion of preformed parison 20' at line 28 as shown in Step A and B. As depicted in Figure 1, the gas flowing radially outwardly from points 28 on mandrel 18 inflates the preformed parison 20' in such manner that the top of parison 20' adjacent neck portion 22 expands radially outwardly until it abuts side wall 30 of blow mold 26. Thereafter as the gas continues to inflate parison 20', the outward radial expansion of parison 20' progresses along the length of mandrel 18, as indicated by the arrow 32. Expansion of the parison continues until the outer surface of the parison conforms to the interior surface of blow mold 26 and a bottle shape has been imparted to

the parison 20'. At this point cooling of the blow mold and the parison material is begun while the pressure of the inflating gas is kept fairly constant so that the parison will not lose its bottle shape during cooling and hardening.

After the fully shaped parison 20' has been cooled to a fairly rigid and hardened shape, split blow mold 26 is separated and the blow molded bottle 34 is transferred for further cooling, ejection and storage

Commercially, blow molded bottles or other barrier containers are manufactured by high speed equipment in very large numbers. In extrusion blow molding, for example, barrier containers, such as bottles, can be made on continuous extrusion transfer equipment in which a single manifold die head forms the hollow tube for continuous introduction, after cutting to a proper length, into a number of blowing molds. Another commerically utilized process is a continuous extrusion preform transfer process, such as that depicted in Figure 1, wherein an extruded tube is deposited into a shaping or prefroming mold where the bottom is closed or sealed while the neck is held open around a mandrel and the preformed molten parison is then placed in a blow mold for final shaping. In another continuous method, equipment is used having a vertical wheel or endless belt - located next to the die of a continuous tube extruder -- on which a series of split blowing molds are mounted. Each of the molds is independently operated, hydraulically or pneumatically. As the wheel turns, one mold at a time passes under the extruder die to receive and close around the molten tubular parison. Rotation of the vertical wheel or mold carrier is set to provide ample time for an open mold to receive

the tube and then to blow, cool and eject the finished product.

Regardless of which method is employed, the barrier containers formed from the compositions of the subject invention possess improved resistance to the transmission and permeation of carbon dioxide and water vapor as compared with "bottle grade" poly(ethylene terephthalate) making them more desirable for the shipping and storage of certain materials, such as for example, carbonated soft drinks.

Similarly, the subject invention includes new and improved barrier films or sheets formed from the compositions of this invention. Films and thicker sheets may be prepared, for example, by extruding the thermoplastic compositions of this invention directly into the nib formed between two heated calender rolls which are separated to a desired thickness to form a film or sheet. Thereafter the film or sheet is cooled and either wound onto a roll or cut for storage in accordance with methods well known to those skilled in this art.

Blown barrier films may also be prepared from the compositions of the subject invention in much the same manner as for blow molded bottles. More particularly, a molten parison of the thermoplastic composition of the subject invention is formed at an extruder die equipped with radially spaced air jets. The molten parison is pulled and elongated and expanded with a gas to form a large blown cylinder-like bubble which may be as much as four feet long and three feet in diameter or more. The top and bottom portions of the blown parison are removed, and one side of the blown cylindrical film is slit to provide a rectangular piece of polymer film.

This rectangular section of film may then be spliced end to end with another section of film by application of heat and pressure and thereafter cooled and wound onto a roll for storage, also in accordance with methods known in the art.

In still another aspect of the subject invention there are provided new and improved multilayered barrier laminates and multiwalled barrier containers which comprise at least one layer formed of the compositions of the subject invention and at least one other layer firmly adhered to said first layer of a dissimilar thermoplastic material. By dissimilar thermoplastic material is meant a layer of a thermoplastic composition which is not the same as the new and improved barrier compositions of the subject invention described above. Illustrative examples might include poly(alkylene terephthalates), polycarbonates, poly(arylsulfones), polyacrylates, polymethacrylates, polyurethanes, polyamides, polyimides, polyamideimides, polyesterimides, polyesteramides, thermoplastic elastomers and the like. The selection of a dissimilar thermoplastic material is not critical and will depend upon the desired end use for the multilayered barrier laminate or the multiwalled barrier container. The compositions of the subject invention from early indications, are unexpectedly compatible with dissimilar resins.

In a preferred embodiment of this aspect of the subject invention, a new and improved multilayered barrier laminate and multiwalled barrier container is provided in the form of a sandwich structure material comprising two outer layers of an aromatic polycarbon-ate and an intermediate layer of the new and improved

low gas permeable ultrahigh molecular weight poly(1,4-butylene terephthalate) resin modified as taught herein.

The aromatic polycarbonate resin for use in the preferred multilayer laminates and multiwalled barrier containers has recurring units of the formula:

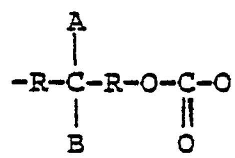

I

wherein each -R- is selected from the group consisting of phenylene, halo-substituted phenylene and alkylsubstituted phenylene and A and B are each selected from the group consisting of hydrogen, hydrocarbon radicals free from aliphatic unsaturation and radicals which together with the adjoining

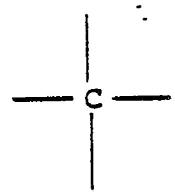

atom form a cycloalkane radical, to total number of carbon atoms in A and B being up to 12.

The aromatic carbonate polymers for use herein are well known, and many suitable resins of this group are disclosed in the Encyclopedia of Polymer Science and Technology, Vol. 10, pages 710-727, 1969, Interscience of New York, and Baron et al., U.S. 4,034,016, both of which are incorporated herein by reference.

The polycarbonate is preferably a high molecular weight polymer having the formula:

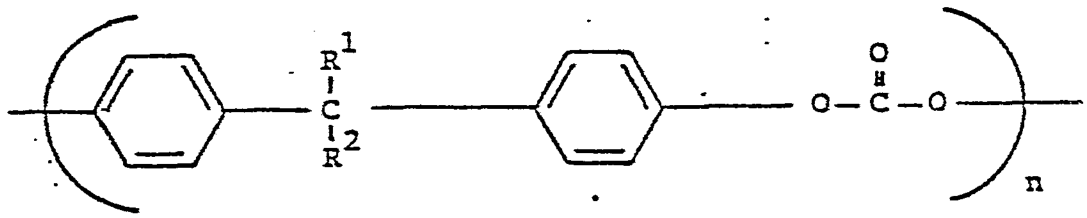

II

where $R^1$ and $R^2$ are hydrogen, (lower) alkyl or phenyl and n is at least 30, and preferably 40 to 400. The term "(lower) alkyl" includes hydrocarbon groups of from 1-6 carbon atoms.

High molecular weight, thermoplastic aromatic polycarbonates in the sense of the present invention are to be understood as homopolycarbonates and copolycarbonates and mixtures thereof which have a number average molecular weight of about 8,000 to more than 200,000, preferably about 10,000 to 80,000 and an intrinsic visocisity of 0.30 to 1.0 deciliters per gram (dl/g.) as measured in solution in methylene chloride at 25°C. The polycarbonates are derived from dihydric phenols such as, for example, 2,2-bis(4-hydroxyphenyl)propane, bis(4-hydroxyphenyl)methane, 2,2-bis(4-hydroxy-3-methylphenyl)propane, 4,4-bis(4-hydroxyphenyl)heptane, 2,2-(3,5,3',5'-tetrachloro-4,4'-dihydroxyphenyl)propane, 2,2-(3,5,3',5'-tetrachloro-4,4'-dihydroxyphenyl)propane, 2,2-(3,5,3',5'-tetrabromo-4,4'-dihydroxydiphenyl)propane, and 3,3,'-dichloro-4,4'-dihydroxydiphenyl) propane, and (3,3'-dichloro-4,4'-dihydroxydiphenyl)methane. Other dihydric phenols for use in the preparation of the above polycarbonates are disclosed in U.S. Patent Nos. 2,999,835; 3,028,365; 3,334,154 and 4,134,575

incorporated herein by reference.

The polycarbonates can be manufactured by known processes, such as, for example, by reacting a dihydric phenol with a carbonate precursor such as phosgene in accordance with methods set forth in the above-cited literature and in U.S. Patent Nos. 3,989,672; 4,081,750 and 4,123,436, or by transesterification processes such as are disclosed in U.S. Patent No. 3,153,008, as well as other processes known to those skilled in the art, all of which are incorporated herein by reference.

The aromatic polycarbonates utilized in the present invention also include the polymeric derivative of a dihydric phenol, a dicarboxylic acid, and carbonic acid, such as are disclosed in U.S. Patent No. 3,169,121.

It is also possible to employ two or more different dihydric phenols or a copolymer of a dihydric phenol with a glycol or acid terminated polyester, or with a dibasic acid in the event a carbonate copolymer or interpolymer rather than a homopolymer is desired for use in the preparation of the aromatic polycarbonate. Also employable are blends of any of the above materials.

Branched polycarbonates, such as are described in U.S. Patent No. 4,001,184, can be utilized, as can blends of a linear polycarbonate and a branched polycarbonate.

The preferred polycarbonate resins may be derived from the reaction of bisphenol-A and phosgene. These polycarbonates have from 10-400 recuring units of the formula:

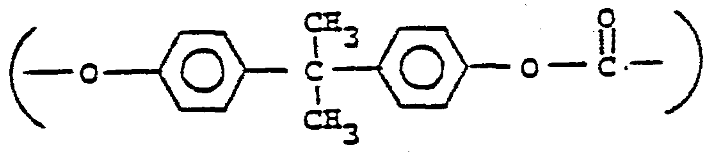 III

The polycarbonate should have an intrinsic viscosity between 0.3 and 1.0 dl./g. preferably from 0.40 to 0.65 dl./g. as measured at 25°C. in methylene chloride or a similar solvent. Because of its ready availability, the ease with which it reacts with phosgene and the very satisfactory properties which it provides in polymerized form, bisphenol-A is preferred as the starting dihydric phenol compound. A suitable bisphenol-A polycarbonate is available under the trademark LEXAN® from General Electric Company.

The multilayer barrier laminates and multiwalled barrier containers of the subject invention exhibit many advantageous and unexpected properties. The aromatic polycarbonate outer layer lends strength and stiffness to the laminate materials, while the barrier composition interlayer effectively decreases the permeability of the laminate to carbon dioxide and water vapor.

The laminate materials exhibit excellent multiwall or multilayer compatibility such that they may be formed, for example by co-extruding the three layers together and thereafter passing the three-layer molten laminate through high temperature-high pressure calender to adhere the layers one to the other. Upon cooling and cutting, thermoforming or otherwise subjecting the laminate to stress, no delamination has been

observed.

In another method, preformed sheets of the polycarbonate and the barrier material can be stacked to form the sandwich materials. The stacked prelaminate can then be subjected to temperatures of about 260° - 280°C. and pressures of about 20,000 psi and thereafter cooled. When manually tested for peel strength adhesion, layers of the sample laminate were not peelable. This is unexpected and surprising because in order to obtain firmly adhered laminates from incompatible resins in the past, a layer of an adhesive compound had to be interposed between the resin layers of the laminate. The new and improved laminates of the subject invention do not require the use of an added adhesive.

Another advantageous property of the multiwalled barrier containers of the subject invention is that they are capable of being formed by high speed co-extrusion blow molding techniques. The co-extrusion blow molding of multiwalled containers is presently known to those skilled in this art. By way of illustration and referring to Figure 2, the major steps in the process of blow molding a new and improved multiwalled barrier container are schematically shown. As described above with reference to the single walled barrier container shown in Figure 1, the steps for forming the multiwalled barrier container are: Step A - co-extruding the three resin layers together into the preforming mold to form a multiwalled parison; Step B transferring the performed parison to a blow mold and inflating the parison to form the molded article; and Step C thereafter cooling and removing the final multiwalled barrier container for storage.

More particularly as shown in Figure 2, Step A, three extruders 40, 42, and 44 are employed to co-extrude a three-walled parison 46 into the preform mold 48. Extruder 40 containing an aromatic polycarbonate resin directs the polycarbonate into specially designed preform mold 48 in such manner as to form inner polycarbonate layer 50 within parison 46. Extruder 42 containing the new and improved polyester barrier composition of the subject invention directs this resins into prefrom mold 48 so as to form intermediate or core barrier layer 52 in parison 46. Extruder 44 contains an aromatic polycarbonate resin and extrudes the resin into prefrom mold 48 so as to form outer polycarbonate layer 54 in parison 46. As before, the bottom of multiwalled parison 46 will be sealed and any neck characteristics, such as threads 56, may be imparted to the parison at this time. The molten multiwalled parison is then transferred to blow mold 58 depicted in Step B where, as before, an inflating gas is released into the interior of parison 46 causing the top of parison 46 near the neck portion of the preformed parison to expand outwardly first. The parison then expands outwardly and downwardly within the mold in a smooth continuous manner until the parison has assumed the configuration of the interior of blow mold 58. Thereafter the bottle shaped parison 60 is cooled keeping the gas pressure constant until sufficiently hardened. The blow molded bottle 60 is removed from the blow mold for further cooling and storage.

The bottle produced according to the co-extrusion blow molding methods described above, and as known in this art, provides a multiwalled barrier container having an interior lining and exterior surface layer which are physiologically harmless, which exhibit

superior resistance to washing media and recycling. The barrier containers exhibit excellent resistance to carbon dioxide permeation as well as retention of excellent water vapor permeation relative to other tested materials because of the new and improved polyester of this invention, forming the core barrier layer.

In especially preferred embodiments, the multiwalled barrier container will have an intermediate barrier layer formed from a composition comprising about 25 parts by weight of ultrahigh molecular weight poly-(1,4-butylene terephthalate) component (a) and about 75 parts by weight of modifier (b), per 100 parts by weight of (a) and (b) together. Multiwalled barrier containers provided with an intermediate barrier layer composition comprised of the components in the above-cited ranges are transparent, and may be recycled for a number of uses.

In each of the above-described processes for making the new and improved articles, barrier films, single walled barrier containers, multilayered barrier laminates and multiwalled barrier containers, conventional equipment temperatures may effectively be employed e.g., 148°-316°C., and conventional mold temperatures, e.g., 38°-93°C. are useful. If necessary, those skilled in the art will be able to make conventional adjustments to accomodate the variations in molecular weight and the like in the polyester molding materials.

The following Examples are provided to better illustrate the compositions of the subject invention, articles made therefrom, and their properties. They are intended to aid the skilled artisan in the practice of the invention and should not be construed as limitation.

EXAMPLE 1

An ultrahigh molecular weight poly(1,4-butylene terephthalate) was prepared as follows. 99.0 parts by weight of commercial grade poly(1,4-butylene terephthalate)(VALOX® 315, General Electric Company) having an intrinsic viscosity of about 1.1 and a melt viscosity (MV) of about 6,500 poises at 250°C and 1 part by weight sodium carbonate were dry blended and extruded through a single screw compounding extruder at 254° - 271°C. The resulting product had a melt viscosity (MV) of 87,000 poises at 250°C. The melt strength was 7g. versus less than 1g for the control, when measured on a Toyo Seiki melt strength tester. The intrinsic viscosity was 1.742. The weight average molecular weight was thus calculated to be approximately 55,000.

The ultrahigh molecular weight poly(1,4-butylene terephthalate) resin prepared above was modified in accordance with the subject invention by incorporating therein an amorphous copolyester copolymer resin in the form of a poly((0.7)ethylene-co-(0.3)1,4-cyclohexanedimethylene terephthalate) resin as follows:

75 parts by weight of the ultrahigh molecular weight poly(1,4-butylene terephthalate) resin and 25 parts by weight of poly((0.7)ethylene-co-(0.3)1,4-cyclohexanedimethylene terephthalate) (KODAR PETG 6763, Eastman Chemical Company) were dry blended, then extruded at about 260°C. to form pellets. The pellets were then film extruded at about 232°C. into films approximately 7.2 mils thick having a transparency of 43.8% on conventional equipment.

The resultant films were evaluated for barrier properties by Modern Controls, Inc., Elk River, Minnesota, U.S.A., in accordance with standard test ASTM E-96-66 (1972) for Water Vapor Transmission of Materials In Sheet Form as modified by the use of a Permatram W testing machine, and carbon dioxide transmission in accordance with a similar test method as modified by the use of a Permatram C machine.

More particularly, the films were tested for water vapor permeability by placing and sealing the film over a contained water bath and allowing the film to come to equilibrium. The Permatram W machine is equippped with an IR detector across the container adjacent the water bath or underside of the film which is capable of converting the moisture or relative humidity present in the contained water bath into voltage. The IR detector is electrically connected to a chart recorder capable of recording changes in voltage with respect to time.

With the film at equilibrium and the water bath at 38°C., the outer surface or top side of the film is subjected to the flow of warm dry air. The chart reader is started and water vapor transmission through the film is recorded for a 24 hour period. The relative humidity of the contained water bath after 24 hours provides the measure of the amount of water vapor which has permeated through the film.

Carbon dioxide transmission was measured in the same manner using an IR detector and providing a sealed container containing a known volume of carbon dioxide at a known pressure.

0121883

EXAMPLES 2-4

Several barrier films were prepared from compositions comprising the ultrahigh molecular weight poly(1,4-butylene terephthalate) prepared in Example 1 and modified with varying amounts of KODAR PETG 6763 or with poly(ethylene terephthalate). The films were tested for carbon dioxide and water vapor permeability on the Permatram C and Permatram W testing machines, respectively, in accordance with the methods outlined in Example 1. The film compositions and the results obtained are set forth in TABLE 1.

TABLE 1: GAS PERMEABILITY OF MODIFIED ULTRAHIGH MOLECULAR WEIGHT POLY (1,4-BUTYLENE TEREPHTHALATE) FILMS

| EXAMPLES | 1 | 2 | 3 | 4 |
|---|---|---|---|---|
| COMPOSITIONS (pbw) | | | | |
| ultrahigh molecular weight poly(1,4-butylene terephthalate) | 75 | 60 | 75 | 60 |
| poly((0.7)ethylene-co-(0.3) 1,4-cyclohexanedimethylene terephthalate | 25 | 40 | -- | -- |
| poly(ethylene terephthalate) | -- | -- | 25 | 40 |
| PROPERTIES | | | | |
| thickness (mils) | 7.2 | 7.4 | 9.4 | 7.5 |
| transparency (%) | 43.8 | 85.0 | 54.3 | 87.5 |
| $CO_2$ Permeability ($cc/24\ hrs/100\ in^2/mil/atm$) | 0.78 | 1.12 | 0.59 | 1.14 |
| Water Vapor Permeability ($gm/24\ hrs./100\ in^2/mil$ at 100°F and 100% relative humidity) | 3.46 | 5.24 | 4.7 | 5.85 |

The barrier films prepared in accordance with the subject invention exhibited superior resistance to the transmission of carbon dioxide in comparison with poly(1,4-butylene terephthalate) which has a $CO_2$ permeability of 34.0; KODAR PETG 6763 which has a $CO_2$ permeability of 30.0; bottle grade poly(ethylene terephthalate) which has a $CO_2$ permeability of 12.0-20.0, depending on the degree of orientation; and bisphenol-A polycarbonate which has a $CO_2$ permeability of 1050, based on similar units.

The new and improved barrier films of the subject invention exhibited improved carbon dioxide resistance. The water vapor permeability of the composition of the invention were quite low and are comparable to other materials' literature values under standard testing conditions. For example commercial poly(1,4-butylene terephthalate) has a water vapor permeability of 4.6, Kodar PETG 6763 has a water vapor permeability of 6.0; bottle grade poly(ethylene terephthalate) has a water vapor permeability of 2.0; and bisphenol-A polycarbonate has a water vapor permeability of 11.0.

## EXAMPLES 5 AND 6

In accordance with procedure outlined in Example 1, two barrier compositions within the scope of this invention were prepared, one having the formulation of Example 1 and the second having the formulation of Example 2, more particularly a 75/25 blend and 60/40 blend, respectively of ultrahigh molecular weight poly(1,4-butylene terephthalate)/Kodar PETG 6763. Each of the two compositions was loaded into an IMPCO molding machine B13 for blow molding 12 oz. bottles. The molding temperatures employed were as follows:

Molding Temp in °C.

| | Rear | Front | Die | Stock |
|---|---|---|---|---|
| 75/25 blend | 229 | 229 | 232 | 250 |
| 60/40 blend | 224 | 224 | 227 | 242 |

Each of the compositions was successfully blow molded to form barrier bottles for carbonated beverages.

EXAMPLE 8

The 75/25 and 60/40 blend barrier compositions of Example 7 can be coextrusion blow molded with an inner and outer adjacent resin layer of bisphenol-A polycarbonate in a conventional coextrusion or coinjection blow molding machine, Impco Molding Machine B13. The bottles having a sidewall structure of polycarbonate - barrier composition - polycarbonate can be successfully blow molded and are suitable barrier containers for storing carbonated beverages. No adhesive is necessary to firmly adhere the resin layers in these multiwalled barrier containers. The bottles are washable, recyclable and exhibit excellent resistance to transmission of water vapor and carbon dioxide.

All of the above-cited patents, applications and publications are specifically incorporated herein by reference. Although the subject invention has been described with reference to certain preferred embodiments variations and other modifications will suggest themselves to those skilled in this art in light of the above teachings. For example, instead of the poly((0.7) ethylene-co-(0.3)1,4-cyclohexanedimethylene terephthalate),

there can be substituted poly((0.65)1,4-cyclohexanedimethylene-co-(0.35)ethylene terephthalate) or poly(1,4-cyclohexanedimethylene-terephthalate-co-isophthalate).

A reinforcing amount, e.g. 20 parts by weight, of fibrous glass per 100 parts by weight of components (a), (b) and glass can be included.

Moreover, in place of the aromatic polycarbonate layers in the multilayered barrier laminates and multiwalled barrier containers, a poly(methylmethacrylate) layer could be used.

All such obvious variations and modifications are with the intended scope and spirit of the subject invention as defined by the appended claims.

WHAT IS CLAIMED:

1. A thermoplastic composition comprising:
   (a) an ultrahighly polymeric poly(1,4-butylene terephthalate) resin having an intrinsic viscosity above about 1.5 dl/g as measured in a 60/40 mixture of phenol/tetrachloroethane at 30°C; and
   (b) a modifier therefor comprising an amorphous copolyester copolymer derived from:
      (i) a glycol portion comprising a glycol selected from the group consisting of 1,4-cyclohexanedimethanol and a mixture of 1,4-cyclohexanedimethanol and ethylene glycol wherein the molar ratio of 1,4-cyclohexanedimethanol to ethylene glycol is from about 1:4 to 4:1, respectively; and
      (ii) an acid portion comprising an aromatic dicarboxylic acid selected from the group consisting of terephthalic acid, isophthalic acid, and a mixture of the two acids, provided that when the glycol portion comprises 1,4-cyclohexanedimethanol alone, the acid portion comprises a mixture of terephthalic and isophthalic acids.

2. A thermoplastic composition as defined in Claim 1 wherein component (a) comprises from 98 to 2 parts by weight and component (b) comprises from about 2 to 98 parts by weight, based upon 100 parts by weight of components (a) and (b).

3. A thermoplastic composition as defined in Claim 1 wherein component (b) comprises poly((0.7) ethylene-co-(0.3)1,4-cyclohexanedimethylene terephthalate).

4. A thermoplastic composition as defined in Claim 1, wherein modifier (b) comprises poly((0.65) 1,4-cyclohexanedimethylene-co-(0.35)ethylene terephthalate).

5. A thermoplastic composition as defined in Claim 1, wherein modifier (b) comprises poly(1,4-cyclohexanedimethylene terephthalate-co-isophthalate).

6. A single walled barrier container exhibiting low permeability to carbon dioxide and water vapor thermoformed from a thermoplastic composition which comprises:

(a) an ultrahigh molecular weight poly(1,4-butylene terephthalate) resin having an intrinsic viscosity above about 1.5 dl/g as measured in a 60/40 mixture of phenol/tetrachloroethane at 30°C; and

(b) a modifier therefor comprising a polyester derived from

(i) a glycol portion comprising a glycol selected from the group consisting of ethylene glycol, 1,4-cyclohexanedimethanol and a mixture of 1,4-cyclohexanedimethanol and ethylene glycol wherein the molar ratio of 1,4-cyclohexanedimethanol to ethylene glycol is from about 1:4 to 4:1, respectively; and

(ii) an acid portion comprising an aromatic dicarboxylic acid selected from the group consisting of terephthalic acid, isophthalic acid and a mixture of the two acids, provided that when the glycol portion comprises 1,4-cyclohexanedimethanol alone, the acid portion comprises a mixture of terephthalic and isophthalic acids.

7. A single walled barrier container as defined in Claim 6 wherein in said thermoplastic composition, component (a) comprises from about 98 to 2 parts by weight and component (b) comprises from about 2 to 98 parts by weight based upon 100 parts by weight of (a) and (b).

8. A single walled barrier container as defined in Claim 6, wherein in said thermoplastic composition, modifier (b) comprises poly(ethylene terephthalate).

9. A single walled barrier container as defined in Claim 6, wherein in said thermoplastic composition, modifier (b) comprises poly((0.7)-ethylene-co-(0.3)1,4-cyclohexanedimethylene terephthalate).

10. A single walled barrier container as defined in Claim 6, wherein in said thermoplastic composition, modifier (b) comprises poly((0.65)1,4-cyclohexanedimethylene-co-(0.35)ethylene terephthalate).

11. A single walled barrier container as defined in Claim 6, wherein in said thermoplastic composition, modifier (b) comprises poly(1,4-cyclohexanedimethylene terephthalate-co-isophthalate).

12. A barrier film exhibiting low permeability to carbon dioxide and water vapor thermoformed from the thermoplastic composition defined in Claim 1.

13. A thermoplastic composition as defined in Claim 1, wherein said glycol portion (b)(i) may additionally include ethylene glycol.

14. A barrier film exhibiting low permeability to carbon dioxide and water vapor thermoformed form the composition defined in Claim 13.

15. A multilayer barrier laminate exhibiting low permeability to carbon dioxide and water vapor which comprises

(A) at least one layer of a thermoplastic composition which comprises:

(i) an ultrahigh molecular weight poly(1,4-butylene terephthalate) resin having an intrinsic viscosity of above about 1.5 dl/g as measured in a 60/40 mixture of phenol/tetrachloroethane at 30°C; and

(ii) a modifier therefor comprising a polyester derived from

(a) a glycol portion comprising a glycol selected from the group consisting of ethylene glycol, 1,4-cyclohexanedimethanol and a mixture of 1,4-cyclohexanedimethanol and ethylene glycol wherein the molar ratio of 1,4-cyclohexanedimethanol to ethylene glycol is from about 1:4 to 4:1, respectively; and

(b) an acid portion comprising an aromatic dicarboxylic acid selected from the group consisting of terephthalic acid, isophthalic acid, and a mixture of the two acids, provided that when the glycol portion comprises 1,4-cyclohexanedimethanol alone, the acid portion comprises a mixture of terephthalic and

isophthalic acids; and

(B) at least one other layer firmly adhered to said first layer of a dissimilar thermoplastic material.

16. A multilayer barrier laminate as recited in Claim 15, wherein said layer (b) comprises a layer of bisphenol-A polycarbonate.

17. A thermoformed multiwalled barrier container exhibiting low permeability to carbon dioxide and water vapor and high resistance to washing and recycling, said container being formed of a sandwich structure material comprising

(A) a first or inner layer formed from an aromatic polycarbonate;

(B) an intermediate or core barrier layer firmly adhered to said first layer formed from a thermoplastic composition comprising

(i) an ultrahigh molecular weight poly(1,4-butylene terephthalate) resin having an intrinsic viscosity of above about 1.5 dl/g as measured in a 60/40 mixture of phenol/tetrachloroethane at 30°C; and

(ii) a modifier therefor comprising a polyester derived from

(a) a glycol portion comprising a glycol selected from the group consisting of ethylene glycol, 1,4-cyclohexanedimethanol and a mixture of 1,4-cyclohexanedimethanol and

ethylene glycol wherein the molar ratio of 1,4-cyclohexanedimethanol to ethylene glycol is from about 1:4 to 4:1, respectively; and

(b) an acid portion comprising an aromatic dicarboxylic acid selected from the group consisting of terephthalic acid, isophthalic acid, and a mixture of the two acids, provided that when the glycol portion comprises 1,4-cyclohexanedimethanol alone, the acid portion comprises a mixture of terephthalic acid and isophthalic acids; and

(c) a third or outer layer, firmly adhered to said core barrier layer formed from an aromatic polycarbonate.

18. A multiwalled barrier container as defined in Claim 17 thermoformed by co-extrusion blow molding.

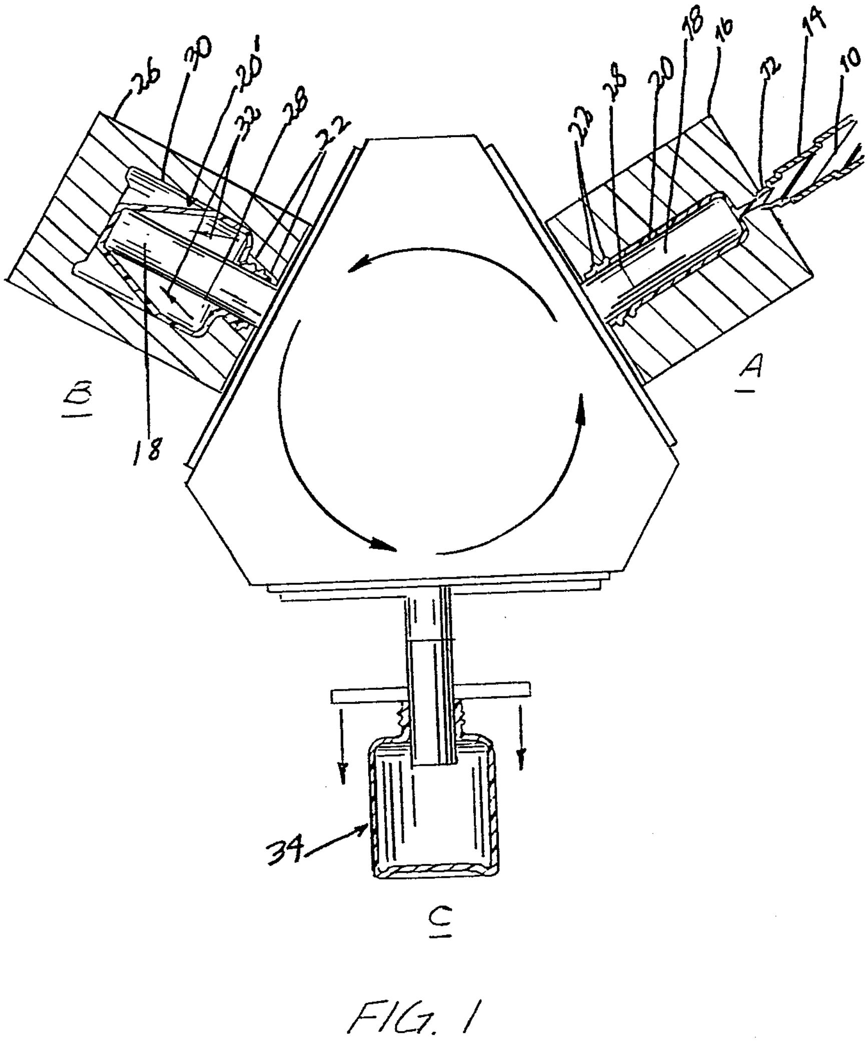


FIG. 1

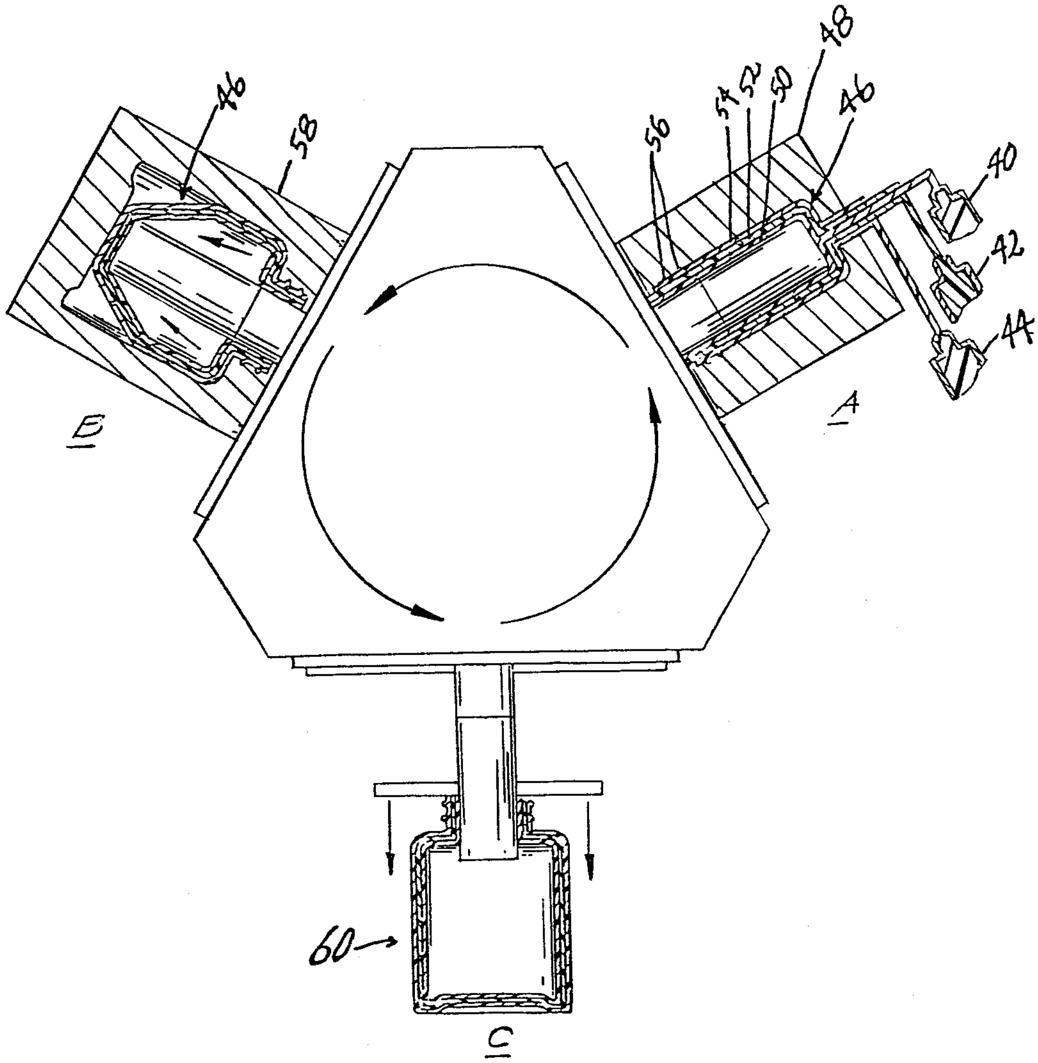


FIG. 2

European Patent Office

# EUROPEAN SEARCH REPORT

Application number
EP 84 10 3604

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-3 931 114 (J.S. GALL et al.)<br>* Claims 1-4 * | 1-14 | C 08 L 67/02 //<br>B 32 B 27/36<br>(C 08 L 67/02<br>C 08 L 67/02 ) |
| | --- | | |
| X | US-A-4 125 571 (S.W. SCOTT et al.)<br>* Claims 1-14 * | 1-5 | |
| Y | | 1-14 | |
| | ----- | | |
| | | | TECHNICAL FIELDS SEARCHED (Int. Cl. 3) |
| | | | C 08 L<br>B 32 B |

The present search report has been drawn up for all claims

| Place of search | Date of completion of the search | Examiner |
|---|---|---|
| THE HAGUE | 03-07-1984 | DECOCKER L. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document